Europäisches Patentamt

European Patent Office

Office européen des brevets

(11) Veröffentlichungsnummer: **0 218 772**
**A1**

## (12) EUROPÄISCHE PATENTANMELDUNG

(21) Anmeldenummer: 85890258.8

(22) Anmeldetag: 15.10.85

(51) Int. Cl.4: **C25D 3/56** , C25D 7/10 , F16C 33/12

(43) Veröffentlichungstag der Anmeldung:
22.04.87 Patentblatt 87/17

(84) Benannte Vertragsstaaten:
AT FR GB IT

(71) Anmelder: **Miba Gleitlager Aktiengesellschaft**
**Hauptstrasse 3**
**A-4663 Laakirchen(AT)**

(72) Erfinder: **Grobuschek, Franz, Prof. Dipl. Ing.**
**Dr. techn.**
**Rustonstrasse 6**
**A-4810 Gmunden(AT)**
Erfinder: **Koroschetz, Franz, Dr.**
**Rustonstrasse 5**
**A-4810 Gmunden(AT)**
Erfinder: **Ederer, Ulf Gerhard, Dipl. Ing.**
**Am Wiesenhof 20**
**A-4813 Altmünser(AT)**
Erfinder: **Ehrentraut, Otto**
**Sudetenplatz 1**
**A-4810 Gmunden(AT)**

(74) Vertreter: **Hübscher, Gerhard, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz(AT)**

(54) Galvanisch abgeschiedene Laufschicht für ein Gleitlager.

(57) Eine galvanisch abgeschiedene Laufschicht für ein Gleitlager besteht aus einer Legierung auf Bleibasis mit Zinn-und Kupferzusätzen, wobei der Zinngehalt wenigstens 14 Gew.% ausmacht.

Um trotz einer hohen mechanischen Verschleißfestigkeit eine vergleichsweise geringe Sprödigkeit sicherzustellen, beträgt das Verhältnis von Zinngehalt zu Kupfergehalt maximal 7 : 1. Der Kupfergehalt und der Zinngehalt sind dabei mit 6 Gew.% und 22 Gew.% nach oben begrenzt.

## Galvanisch abgeschiedene Laufschicht für ein Gleitlager

Die Erfindung bezieht sich auf eine galvanisch abgeschiedene Laufschicht für ein Gleitlager, bestehend aus einer Legierung auf Bleibasis mit Zinn- und Kupferzusätzen, wobei der Zinngehalt wenigstens 14 Gew.% ausmacht.

Bei üblichen Mehrschichtgleitlagern wird auf einer stählernen Stützschale eine Lagermetallschicht, beispielsweise aus Leichtmetall oder einer Bleibronze-Legierung, aufgebracht, die die eigentliche Laufschicht trägt. Zwischen dieser galvanisch abgeschiedenen Laufschicht auf Bleibasis und der Lagermetallschicht wird eine Zwischenschicht aus Nickel vorgesehen, die insbesondere bei Lagermetallschichten auf Leichtmetallbasis als Haftvermittler und bei Lagermetallschichten mit einem entsprechenden Kupferanteil als Diffusionssperre dient, um bei höheren Betriebstemperaturen das Eindiffundieren von Zinn aus der Laufschicht in die Lagermetallschicht zu verhindern. Eine solche Zwischenschicht kann aber das Abwandern von Zinn aus der Laufschicht gegen die Zwischenschicht unter Bildung einer Diffusionszone nicht verhindern. Die Diffusionsgeschwindigkeit der Abdiffusion des Zinns kann zwar durch Anheben des Kupfergehaltes stark herabgesetzt werden, doch kommt es bei zu hohem Kupfergehalt der Laufschicht zur Bildung einer sehr spröden (Cu, Ni)-$_6$Sn$_5$-Phase als Diffusionszone und zur Versprödung der Laufschicht selbst durch Ausbildung von Cu$_6$Sn$_5$-Phasen innerhalb der Blei-Zinn-Kupfer-Laufschicht.

Aus diesem Grunde haben die Bemühungen, die mechanische Verschleißfestigkeit durch ein Anheben des Kupfergehaltes auf über 6 Gew.% zu erhöhen (DE-OS 2 722 144), zu einer vergleichsweise hohen Sprödigkeit geführt, obwohl durch eine gleichzeitige Erhöhung des Zinngehaltes auf vorzugsweise 14 Gew.% eine zu starke Einbuße hinsichtlich der Ermüdungsfestigkeit verhindert werden konnte. Diese bekannten Laufschichten eignen sich folglich nur bedingt für hoch beanspruchte Gleitlager, wie sie beispielsweise für aufgeladene Dieselmotoren Verwendung finden.

Der Erfindung liegt demnach die Aufgabe zugrunde, diese Mängel zu vermeiden und eine Laufschicht der eingangs geschilderten Art so zu verbessern, daß trotz einer hohen mechanischen Verschleißfestigkeit eine vergleichsweise geringe Sprödigkeit und damit eine ausreichend hohe Ermüdungsfestigkeit sichergestellt wird.

Die Erfindung löst die gestellte Aufgabe dadurch, daß das Verhältnis von Zinngehalt zu Kupfergehalt maximal 7:1 beträgt, wobei der Kupfergehalt mit 6 Gew.% und der Zinngehalt mit 22 Gew.% nach oben begrenzt sind.

Der Erfindung liegt die Erkenntnis zugrunde, daß es in erster Linie nicht auf den jeweiligen Kupfergehalt für sich ankommt, sondern auf das Verhältnis des Kupfergehaltes zum Zinngehalt, um auch bei höheren Betriebstemperaturen einerseits die Diffusionsgeschwindigkeit des Zinns auf ein zulässiges Maß herabzusetzen und anderseits eine Versprödung der Laufschicht durch die Bildung einer Kupfer-Zinn-Phase größeren Ausmaßes zu verhindern. Dabei muß allerdings der maximale Kupfergehalt mit 6 Gew.% nach oben begrenzt werden. Außerdem darf der Zinngehalt 22 Gew.% nicht übersteigen. Werden diese Randbedingungen eingehalten, so wird eine Laufschicht erhalten, die eine hohe mechanische Verschleißfestigkeit mit einer hohen Ermüdungsfestigkeit verbindet, ohne eine Versprödung und ein Absinken der Korrosionsbeständigkeit in Kauf nehmen zu müssen.

Hebt man den Kupfergehalt im Vergleich zum Zinngehalt auf wenigstens ein Sechstel des Zinngehaltes an, so werden besonders günstige Verhältnisse erreicht. Der Kupfergehalt kann dabei vorzugsweise bis zu einem Drittel des Zinn gehaltes ausmachen.

Um innerhalb der Laufschicht eine Ausbildung einer Kupfer-Zinn-Phase, die zwar die Härte der Laufschicht erhöht, diese aber zusätzlich versprödet, weitgehend zu vermeiden, soll der Kupfergehalt mit zunehmendem Anteil des Zinngehaltes beschränkt werden. Entspricht der Kupfergehalt der Bedingung

$$Cu \leq \frac{200}{Sn + 20},$$

wobei Cu und Sn den in Gew.% angegebenen Gehalt an Kupfer bzw. Zinn bezeichnen, so wird die Ausbildung solcher spröden Kupfer-Zinn-Phasen im Bereich der Laufschicht auf ein unbedeutendes Maß herabgesetzt.

Durch die Wahl des Kupfergehaltes in einem bestimmten Verhältnis zum Zinngehalt können Laufschichten für Gleitlager geschaffen werden, die extremen Betriebsbedingungen standhalten, weil einerseits die Bildung einer Kupfer-Zinn-Phase in einem störenden Ausmaß in der Diffusionszone verhindert und anderseits die Diffusionsgeschwindigkeit auch bei höheren Temperaturen und längeren Temperatureinwirkungen klein gehalten wird, so daß keine größere Zinnanreicherung im Bereich der Zwischenschicht auftreten kann, wodurch die Gefahr eines örtlichen oder bereichsweisen Auftretens schädlicher Diffusionszonen weitgehend ausgeschlossen wird.

## Ansprüche

I. Galvanisch abgeschiedene Laufschicht für ein Gleitlager, bestehend aus einer Legierung auf Bleibasis mit Zinn-und Kupferzusätzen, wobei der Zinngehalt wenigstens I4 Gew.% ausmacht, dadurch gekennzeichnet, daß das Verhältnis von Zinngehalt zu Kupfergehalt maximal 7:I beträgt, wobei der Kupfergehalt mit 6 Gew.% und der Zinngehalt mit 22 Gew.% nach oben begrenzt sind.

2. Laufschicht nach Anspruch I, dadurch gekennzeichnet, daß das Verhältnis von Zinngehalt zu Kupfergehalt maximal 6:I beträgt.

3. Laufschicht nach Anspruch I oder 2, dadurch gekennzeichnet, daß der Kupfergehalt maximal einem Drittel des Zinngehaltes entspricht.

4. Laufschicht nach einem der Ansprüche I bis 3, dadurch gekennzeichnet, daß der Kupfergehalt der Bedingung

$$Cu \leq \frac{200}{Sn + 20}$$

entspricht, wobei Cu und Sn den in Gew.% angegebenen Gehalt an Kupfer bzw. Zinn bezeichnen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | GB-A-2 084 609 (MIBA GLEITLAGER AG) * Insgesamt * | 1-4 | C 25 D 3/56 C 25 D 7/10 F 16 C 33/12 |
| | --- | | |
| Y | EP-A-0 048 579 (GKN VANDERVELL LTD.) * Insgesamt * | 1-4 | |
| | --- | | |
| X | CHEMICAL ABSTRACTS, Band 96, Nr. 16, 19. April 1982, Seite 332, Zusammenfassung Nr. 127872y, Columbus, Ohio, US; F. KOROSCHETZ et al.: "Diffusion processes in electrodeposited lead-tin-copper bearing overlays", & MIKROCIM. ACTA, SUPPL. 1981, Suppl. 9, 139-52 | 1,2,4 | |
| | ----- | | |

RECHERCHIERTE SACHGEBIETE (Int. Cl. 4)

C 25 D 3/56
C 25 D 7/10

Der vorliegende Recherchenbericht wurde für alle Patentansprüche erstellt

| Recherchenort DEN HAAG | Abschlußdatum der Recherche 19-06-1986 | Prüfer VAN LEEUWEN R.H. |
|---|---|---|